# NEUE EUROPÄISCHE PATENTSCHRIFT

(11) **EP 3 663 149 B2**
(45) Veröffentlichungstag und Bekanntmachung des Hinweises auf die Entscheidung über den Einspruch: **16.09.2026**
(45) Hinweis auf die Patenterteilung: 29.03.2023
(21) Anmeldenummer: 18210622.9
(22) Anmeldetag: 06.12.2018
(51) Int. Cl.: B60T 13/74, F16D 65/18, F16D 66/00, F16D 127/06, F16D 125/40, F16D 125/48, F16D 129/10, F16D 121/24

(54) **BLOCKIERVORRICHTUNG FÜR EINE ELEKTROMECHANISCHE BETRIEBSBREMSE EINES KRAFTFAHRZEUGS, ELEKTROMECHANISCHE BETRIEBSBREMSE MIT EINER SOLCHEN BLOCKIERVORRICHTUNG SOWIE KRAFTFAHRZEUG MIT EINER DERARTIGEN ELEKTROMECHANISCHEN BETRIEBSBREMSE**
LOCKING DEVICE FOR AN ELECTROMECHANICAL BRAKE OF MOTOR VEHICLE BRAKE, ELECTROMECHANICAL BRAKE PROVIDED WITH SUCH A LOCKING DEVICE AND MOTOR VEHICLE EQUIPPED WITH SUCH AN ELECTROMECHANICAL BRAKE
DISPOSITIF DE BLOCAGE POUR UN FREIN DE COMMANDE ÉLECTROMÉCANIQUE D'UN VÉHICULE AUTOMOBILE, FREIN DE COMMANDE ÉLECTROMÉCANIQUE DOTÉ D'UN TEL DISPOSITIF DE BLOCAGE AINSI QUE VÉHICULE AUTOMOBILE DOTÉ D'UN TEL FREIN DE COMMANDE ÉLECTROMÉCANIQUE

(43) Veröffentlichungstag der Anmeldung: 10.06.2020
(73) Patentinhaber: IMS Gear SE & Co. KGaA, 78166 Donaueschingen (DE)
(72) Erfinder: STÖHR, Johannes, 78052 Villingen-Schwenningen (DE); FAHRLÄNDER, Klaus, 78554 Aldingen (DE)
(74) Vertreter: Westphal, Mussgnug & Partner Patentanwälte mbB

(56) Entgegenhaltungen:
- EP-A1- 1 460 300
- EP-A1- 1 460 300
- EP-A1- 2 842 823
- EP-A1- 2 842 823
- WO-A1-2016/174587
- US-A1- 2002 118 011
- US-A1- 2004 017 190
- US-A1- 2012 126 796
- US-A1- 2016 017 942

## Beschreibung

Die vorliegende Erfindung betrifft eine Blockiervorrichtung für eine elektromechanische Betriebsbremse eines Kraftfahrzeugs. Weiterhin betrifft die Erfindung eine elektromechanische Betriebsbremse für ein Kraftfahrzeug mit einer solchen Blockiervorrichtung. Darüber hinaus betrifft die Erfindung ein Kraftfahrzeug mit einer derartigen elektromechanischen Betriebsbremse.

Elektromechanische Betriebsbremsen, auch unter dem Begriff "Brake by Wire" bekannt, werden zunehmend anstelle von hydraulisch betriebenen Bremssystemen eingesetzt. Die Gründe hierzu sind unter anderem, dass es elektromechanische Betriebsbremsen auf einfache Art und Weise ermöglichen, die einzelnen Räder des betreffenden Kraftfahrzeugs individuell abzubremsen, was mit hydraulisch betriebenen Bremssystemen nur mit hohem Aufwand zu realisieren ist. Generell ist der apparative Aufwand von elektromechanischen Betriebsbremsen im Vergleich zu hydraulisch betriebenen Betriebsbremsen deutlich geringer. Der wesentliche Aufbau beschränkt sich auf eine Steuereinheit, einen Elektromotor und eine entsprechend dem Anwendungsfall ausgebildete Aktuatoreinheit. Beispielsweise ist es bei elektromechanischen Betriebsbremsen nicht notwendig, einen Bremskraftverstärker vorzusehen. Des Weiteren besteht nicht die Gefahr, dass Hydraulikflüssigkeit aus porösen Hydraulikschläuchen austreten und somit zum Verlust der Funktionsfähigkeit des Bremssystems führen kann. Darüber hinaus geht von austretender Hydraulikflüssigkeit eine Umweltgefährdung aus.

Moderne Kraftfahrzeuge sind in vielen Fällen mit elektromechanischen Blockiervorrichtungen, die auch als Park- oder Feststellbremsen bezeichnetet werden, ausgerüstet, mit welchen verhindert werden kann, dass das betreffende Kraftfahrzeug unkontrolliert aus dem Ruhezustand heraus beginnt zu rollen. Darüber hinaus können derartige Blockiervorrichtungen auch als Anfahrhilfe genutzt werden, da es möglich ist, die Blockiervorrichtungen zu einem bestimmbaren Zeitpunkt automatisch zu lösen, beispielsweise dann, wenn ein bestimmtes Drehmoment vom Motor des Kraftfahrzeugs abgegeben wird. Die Blockiervorrichtungen sind üblicherweise in die Bremssättel der Hinterräder der Betriebsbremse integriert.

Die US 2016/0017942 A1 zeigt eine elektromechanische Blockiervorrichtung, bei der ein Sperrstößel, der zwischen einer ersten Stellung, in welcher der Sperrstößel ein Sperrrad freigibt, und einer zweiten Stellung, in welcher der Sperrstößel zum Blockieren in das Sperrrad eingreift, axial entlang einer Verschiebeachse bewegbar ist. Der Eingriff in das Sperrrad erfolgt dann, wenn die elektromechanische Betriebsbremse die Bremsbeläge auf die Bremsscheibe gedrückt hat und das Kraftfahrzeug steht. Beim Eingriff in das Sperrrad können die Bremsbeläge nicht mehr von der Bremsscheibe wegbewegt werden, wodurch das betreffende Kraftfahrzeug festgestellt ist.

Weitere Betriebsbremsen sind in der EP 2 842 823 A1 und der EP 1 460 300 A1 offenbart. Die WO 2016/174587 A1 beschreibt eine Blockiervorrichtung für einen elektromagnetisch betätigten Bremssattel einer Scheibenbremse. Die Vorrichtung umfasst ein Sperrrad mit mindestens einer Nocke und einem Sperrstößel, der elastisch gegen das Sperrrad gedrückt wird. Durch die spezielle Anordnung kann das Sperrrad in eine Richtung frei drehen, während es in der Gegenrichtung blockiert wird. Ein Schaltelement kann den Sperrstößel zwischen einer Eingriffs- und einer Freigabeposition bewegen, um die Parkbremsfunktion zu aktivieren oder zu lösen. Die Position des Sperrstößels wird mittels eines Positionssensors erfasst, wobei der genaue Sensortyp offen bleibt.

Moderne elektromechanische Betriebsbremsen weisen eine Reaktionszeit von ca. zwischen 0,1 und 0,3 Sekunden auf. Damit die elektromechanische Betriebsbremse optimal mit der Blockiervorrichtung zusammenwirken kann, ist es von hoher Wichtigkeit, dass jederzeit bekannt ist, ob das Sperrrad blockiert oder freigegeben ist. Bei der US 2016/0017942 A1 kann hierzu nur die Bewegungseinrichtung zum Bewegen des Sperrstößels angesteuert werden. Ob das Sperrrad blockiert oder freigegeben ist, kann aber hierdurch nicht genau ermittelt werden. Infolgedessen ist das Zusammenwirken zwischen der elektromechanischen Betriebsbremse und der Blockiervorrichtung nicht optimal. Insbesondere beim Lösen der Blockiervorrichtung treten unerwünschte Effekte auf, beispielsweise dann, wenn der Fahrer des Kraftfahrzeugs bereits losfahren will, die Blockiervorrichtung aber noch nicht vollständig gelöst ist. Hierdurch kann es zu ruckartigen Beschleunigungen und Reibgeräuschen kommen. Um derartige Effekte zu vermeiden, werden die in der US 2016/0017942 A1 gezeigten Blockiervorrichtungen mit einer Reaktionszeit betrieben werden, die deutlich über der oben angegebenen Reaktionszeit von zwischen 0,1 und 0,3 Sekunden liegt, beispielsweise mit einer Wartezeit von 1 Sekunde. Nach Ablauf der Wartezeit kann davon ausgegangen werden, dass die Blockiervorrichtung gelöst ist. Aber auch hierdurch kommt es zu Komforteinbußen insbesondere beim Anfahren, weil die gesamte Betriebsbremse entsprechend träge reagiert.

Aufgabe einer Ausführungsform der vorliegenden Erfindung ist es, eine Blockiervorrichtung anzugeben, die mit einer geringeren Reaktionszeit betrieben werden kann, als es bei aus dem Stand der Technik bekannten Blockiervorrichtungen der Fall ist. Des Weiteren liegt einer Ausgestaltung der vorliegenden Erfindung die Aufgabe zugrunde, eine elektromechanische Betriebsbremse zu schaffen, die mit einer derartigen Blockiervorrichtung betrieben werden kann. Darüber hinaus liegt einer Ausbildung der Erfindung die Aufgabe zugrunde, ein Kraftfahrzeug mit einer derartigen Betriebsbremse bereitzustellen.

Diese Aufgabe wird mit den in den Ansprüchen 1, 12 und 15 angegebenen Merkmalen gelöst. Vorteilhafte Ausführungsformen sind Gegenstand der Unteransprüche.

Eine Ausführungsform der Erfindung betrifft eine Blockiervorrichtung für eine elektromechanische Betriebsbremse eines Kraftfahrzeugs, wobei die elektromechanische Betriebsbremse ein um eine Drehachse drehbar gelagertes Sperrrad aufweist, welches mit einer um dieselbe Drehachse drehbaren Antriebswelle eines Antriebsstrangs einer elektromechanischen Betriebsbremse drehfest verbindbar oder verbunden ist. Die Blockiervorrichtung umfasst einen Sperrstößel, der zwischen einer ersten Stellung, in welcher der Sperrstößel das Sperrrad freigibt, und einer zweiten Stellung, in welcher der Sperrstößel zum Blockieren in das Sperrrad eingreift, axial entlang einer Verschiebeachse bewegbar ist, eine Bewegungseinrichtung zum Bewegen des Sperrstößels entlang der Verschiebeachse, und eine Positionsbestimmungseinrichtung zum Bestimmen der Position des Sperrstößels.

Aufgrund der Tatsache, dass vorschlagsgemäß die Blockiervorrichtung eine Positionsbestimmungseinrichtung aufweist, mit welcher die Position des Sperrstößels zu jeder Zeit bestimmt werden kann, lässt sich ebenfalls zu jeder Zeit ermitteln, ob der Sperrstößel noch in das Sperrrad eingreift und somit das Sperrrad blockiert oder ob der Sperrstößel das Sperrrad freigegeben hat. Aufgrund der jederzeit aktuell vorliegenden Informationen darüber, ob das Sperrrad blockiert oder freigegeben ist, lässt sich die gesamte Betriebsbremse mit einer kürzeren Reaktionszeit betreiben, insbesondere deshalb, da keine bestimmte Zeit abgewartet werden muss, nach welcher die Wahrscheinlichkeit, dass das Sperrrad freigegeben ist, ausreichend groß ist. Die vorschlagsgemäße Blockiervorrichtung bestimmt nicht die Reaktionszeit der gesamten Betriebsbremse beim Feststellen und Lösen der Blockiervorrichtung. Der Fahrkomfort beim Anfahren und Anhalten wird mittels der vorschlagsgemäßen Blockiervorrichtung deutlich erhöht.

Erfindungsgemäß umfasst der Sperrstößel zumindest einen Markierungsabschnitt, welcher mit der Positionsbestimmungseinrichtung zum Bestimmen der Position des Sperrstößels zusammenwirkt. Der Markierungsabschnitt kann beispielsweise eine oder mehrere optisch gut erkennbare Einkerbungen umfassen, welche die Bestimmung der Position des Sperrstößels vereinfachen. Die Positionsbestimmungseinrichtung kann beispielsweise Lichtschranken aufweisen, welche erkennen, ob sich die Einkerbungen in einem ersten oder zweiten Bereich befinden, woraus auf die Position des Sperrstößels geschlossen werden kann.

Erfindungsgemäß weist der Sperrstößel zumindest eine senkrecht zur Bewegungsrichtung verlaufende Markierungsfläche auf, über welche der Markierungsabschnitt mit der Positionsbestimmungseinrichtung zusammenwirkt. Es hat sich herausgestellt, dass mit einer derart ausgerichteten Markierungsfläche eine besonders gute Bestimmung der Position des Sperrstößels realisiert werden kann.

Bei einer weitergebildeten Ausführungsform kann der Sperrstößel zwei parallel zueinander verlaufende Markierungsflächen aufweisen, wobei der ersten Markierungsfläche ein erster Markierungsabschnitt und der zweiten Markierungsfläche ein zweiter Markierungsabschnitt zugeordnet ist. Die Verwendung von zwei Markierungsflächen führt zu einer erhöhten Genauigkeit der Bestimmung der Position des Stößels, weil die Positionsbestimmungseinrichtung die Position des Stößels anhand von zwei unabhängigen Messungen bestimmen kann. Messfehler können erkannt und eliminiert werden.

Bei einer weiteren Ausführungsform kann die Positionsbestimmungseinrichtung zumindest teilweise zwischen den beiden Markierungsflächen angeordnet sein. Die Anordnung der Positionsbestimmungseinrichtung zumindest teilweise zwischen den beiden Markierungsflächen ermöglicht ebenfalls eine gute Detektierung der Position der Markierungsflächen und ermöglicht somit eine besonders genaue Bestimmung der Position des Sperrstößels. Zudem lässt sich hierdurch eine raumsparende Anordnung der Positionsbestimmungseinrichtung verwirklichen.

Dabei kann der zumindest eine Markierungsabschnitt magnetisiert oder magnetisierbar sein. In dieser Ausführungsform lässt sich die Position des Sperrstößels anhand der Änderung des Magnetfelds bestimmen, wozu ein Magnetometer eingesetzt werden kann.

Eine weitergebildete Ausführungsform zeichnet sich dadurch aus, dass der erste Markierungsabschnitt als ein erster Magnet und der zweite Markierungsabschnitt als ein zweiter Magnet ausgebildet sind. Auch in dieser Ausführungsform lässt sich die Position des Sperrstößels anhand einer Messung des Magnetfelds bestimmen, wodurch sich eine kontinuierliche Bestimmung der Position des Sperrstößels besonders einfach umsetzen lässt.

Nach Maßgabe einer weiteren Ausführungsform umfasst die Positionsbestimmungseinrichtung einen Hallsensor. Ein Hallsensor stellt eine häufig verwendete Ausführungsform des Magnetometers dar und ist daher kostengünstig verfügbar. Zudem lässt sich ein Hallsensor besonders einfach in bestehende Steuer- und Regelungskreise einbinden.

Eine weitere Ausführungsform zeichnet sich dadurch aus, dass der Hallsensor als ein 2D-Hallsensor ausgeführt ist. Ein 2D-Hallsensor liefert einerseits nur wenige Daten, andererseits können diese Daten mit nur wenigen elektrischen Kontakten dem Steuer- und Regelkreis zugeführt werden, so dass der Verkabelungsaufwand gering gehalten werden kann. Zudem kann die zum Verarbeiten der Signale notwendige Rechenleistung gering gehalten werden. Auch hierdurch wird ein Beitrag zum Verringern der Reaktionszeit geleistet.

Eine weitergebildete Ausführungsform zeichnet sich dadurch aus, dass der erste Magnet und der zweite Magnet derart im Sperrstößel angeordnet sind, dass ihre gleichnamigen Pole zueinander hinzeigen. In dieser Anordnung ist eine Änderung des Magnetfelds infolge einer Positionsänderung des Sperrstößels besonders gut zu detektieren. Insbesondere kann eine hohe Auflösung erreicht werden, so dass die aktuelle Position des Sperrstößels besonders genau bestimmt werden kann. Auch hierdurch lässt sich die Reaktionszeit der Blockiervorrichtung verringern, da sich bereits sehr früh feststellen lässt, ob der Sperrstößel das Sperrrad freigegeben hat.

Nach Maßgabe einer weiteren Ausführungsform ist der Sperrstößel zumindest teilweise als ein Spritzgussteil ausgebildet, wobei der erste Magnet und der zweite Magnet beim Spritzgießen des Sperrstößels umspritzt werden. Die Ausbildung des Sperrstößels als ein Spritzgussteil hat den Vorteil, dass sich große Stückzahlen auf kostengünstige Weise herstellen lassen. Dabei kann ein Stahleinleger vorgesehen sein, um den Sperrstößel mit der notwendigen Festigkeit auszustatten. Für den Fall, dass die beiden Markierungsabschnitte von den Magneten gebildet werden, bietet es sich an, die beiden Magnete erst nach Fertigstellung des Sperrschiebers zu magnetisieren, um beim Einlegen der beiden Magnete in das Spritzgusswerkzeug nicht die Ausrichtung der Magnete berücksichtigen zu müssen.

Eine weitere Ausführungsform zeichnet sich dadurch aus, dass die Positionsbestimmungseinrichtung eine Temperaturmesseinrichtung umfasst. Da die Blockiervorrichtung in der Nähe der Bremsscheibe der elektromechanischen Betriebsbremse angeordnet ist, kann es zu hohen Temperaturschwankungen im Betrieb des Kraftfahrzeugs kommen. Mittels der Temperaturmesseinrichtung können Einflüsse der Temperatur auf die Bestimmung der Position des Sperrstößels berücksichtigt und beseitigt werden.

Bei einer weitergebildeten Ausführungsform umfasst die Bewegungseinrichtung einen Gleichstrommotor. Gleichstrommotoren sind besonders kostengünstig, so dass in dieser Ausführungsform die Blockiervorrichtung mit geringem finanziellen Aufwand bereitgestellt werden kann.

Eine Ausbildung der Erfindung betrifft eine elektromechanische Betriebsbremse für ein Kraftfahrzeug, umfassend eine Bremseinheit zum Abbremsen eines Rads des Kraftfahrzeugs, eine Antriebseinheit zum Bereitstellen eines Bremsmoments, mit welchem das Rad abbremsbar ist, einen mit der Antriebseinheit zusammenwirkenden Antriebsstrang, mit welchem das Bremsmoment zum Betätigen der Bremseinheit auf die Bremseinheit übertragbar ist, und eine Blockiervorrichtung nach einem der vorherigen Ausführungsformen. Die technischen Effekte und Vorteile, die sich mit der vorschlagsgemäßen elektromechanischen Betriebsbremse erreichen lassen, entsprechen denjenigen, die für die vorliegende Blockiervorrichtung erörtert worden sind. Zusammenfassend sei darauf hingewiesen, dass aufgrund der Tatsache, dass die Position des Sperrstößels kontinuierlich bestimmt werden kann, zu jeder Zeit eine Information darüber vorhanden ist, ob der Sperrstößel das Sperrrad blockiert oder freigibt. Die elektromechanische Betriebsbremse kann mit einer verringerten Reaktionszeit betrieben werden, was sich insbesondere beim Anfahren in einem erhöhten Fahrkomfort niederschlägt.

Bei einer weiteren Ausbildung ist vorgesehen, dass die elektromechanische Betriebsbremse eine Steuereinheit zum Ansteuern der Antriebseinheit umfasst, wobei die Positionsbestimmungseinrichtung mit der Steuereinheit zusammenwirkt. Die Verwendung der Steuereinheit, die mit der Positionsbestimmungseinrichtung zusammenwirkt, ermöglicht es, die Information über die Position des Sperrstößels für verschiedene Zwecke zu verwenden. Beispielsweise kann die Steuereinheit eine automatische Aktivierung der Blockiervorrichtung vornehmen, wenn die Steuereinheit feststellt, dass das Kraftfahrzeug für eine längere Zeit steht, die Blockiervorrichtung aber nicht betätigt worden ist. Dies kann beispielsweise nach einer Notbremsung infolge eines Unfalls der Fall sein, bei welchem der Fahrer ohnmächtig geworden ist und die Blockiervorrichtung selbst nicht mehr betätigen kann. Hierdurch wird verhindert, dass das Kraftfahrzeug nach erfolgter Notbremsung unkontrolliert weg rollt.

Eine fortentwickelte Ausbildung gibt vor, dass die Steuereinheit und die Positionsbestimmungseinrichtung so eingerichtet sind, dass die Bestimmung der Position des Sperrstößels anhand eines ersten Zustands und eines zweiten Zustands vorgenommen wird. Der erste Zustand beschreibt dabei beispielsweise die Positionen des Sperrstößels, in welchen er das Sperrrad blockiert und der zweite Zustand beschreibt die Positionen des Sperrstößels, in welchen er das Sperrrad freigibt. In dieser Ausbildung ist es daher nicht notwendig, für jede Position des Sperrstößels einen numerischen Wert zu ermitteln, sondern es genügt, eine Information darüber zu erhalten, ob der Sperrstößel das Sperrrad blockiert oder freigibt. Die benötigten Datenmengen werden hierdurch verringert, ohne dass es zu einer Funktionsbeeinträchtigung kommt.

Die Positionsbestimmungseinrichtung kann mit einfachen und folglich kostengünstigen Komponenten ausgerüstet werden. Zudem kann die Software einfach gehalten werden. Aufgrund der geringen Datenmengen sind die benötigten Rechnerkapazitäten zum Auswerten der Signale der Positionsbestimmungseinrichtung ebenfalls gering, zudem können die Signale der Positionsbestimmungseinrichtung schnell ausgewertet werden, was ebenfalls zu einer Reduzierung der Reaktionszeit der vorschlagsgemäßen elektromechanischen Betriebsbremse beiträgt.

Eine Ausgestaltung der Erfindung betrifft ein Kraftfahrzeug, umfassend eine elektromechanische Betriebsbremse nach einer der vorherigen Ausbildungen. Die technischen Effekte und Vorteile, die sich mit der vorschlagsgemäßen elektromechanischen Betriebsbremse erreichen lassen, entsprechen denjenigen, die für die vorliegende Blockiervorrichtung erörtert worden sind. Zusammenfassend sei darauf hingewiesen, dass aufgrund der Tatsache, dass die Position des Sperrstößels kontinuierlich bestimmt werden kann, zu jeder Zeit eine Information darüber vorhanden ist, ob der Sperrstößel das Sperrrad blockiert oder freigibt. Die elektromechanische Betriebsbremse kann mit einer verringerten Reaktionszeit betrieben werden, was sich insbesondere beim Anfahren in einem erhöhten Fahrkomfort niederschlägt.

Beispielhafte Ausführungsformen der Erfindung werden im Folgenden unter Bezugnahme auf die beigefügten Zeichnungen näher erläutert. Es zeigen
- Figur 1: eine prinzipielle Draufsicht auf ein Kraftfahrzeug, das eine elektromechanische Betriebsbremse mit einer erfindungsgemäßen Blockiervorrichtung aufweist,
- Figur 2A: eine prinzipielle Darstellung einer Ausführungsform der erfindungsgemäßen Blockiervorrichtung, wobei sich die Blockiervorrichtung in einer ersten Stellung befindet,
- Figur 2B: eine prinzipielle Darstellung der Änderung der Stärke des Magnetfelds in Abhängigkeit der Distanz, wobei die sich in der ersten Stellung ergebende Stärke des Magnetfelds gekennzeichnet ist,
- Figur 3A: eine prinzipielle Darstellung der in Figur 2 dargestellten Blockiervorrichtung die sich in einer Zwischenstellung befindet,
- Figur 3B: eine prinzipielle Darstellung der Änderung der Stärke des Magnetfelds in Abhängigkeit der Distanz, wobei die sich in der Zwischenstellung ergebende Stärke des Magnetfelds gekennzeichnet ist,
- Figur 4A: eine prinzipielle Darstellung der in Figur 2 dargestellten Blockiervorrichtung die sich in einer zweiten Stellung befindet,
- Figur 4B: eine prinzipielle Darstellung der Änderung der Stärke des Magnetfelds in Abhängigkeit der Distanz, wobei die sich in der zweiten Stellung ergebende Stärke des Magnetfelds gekennzeichnet ist,
- Figur 5: eine separate prinzipielle Darstellung einer Ausführungsform der Positionsbestimmungseinrichtung.

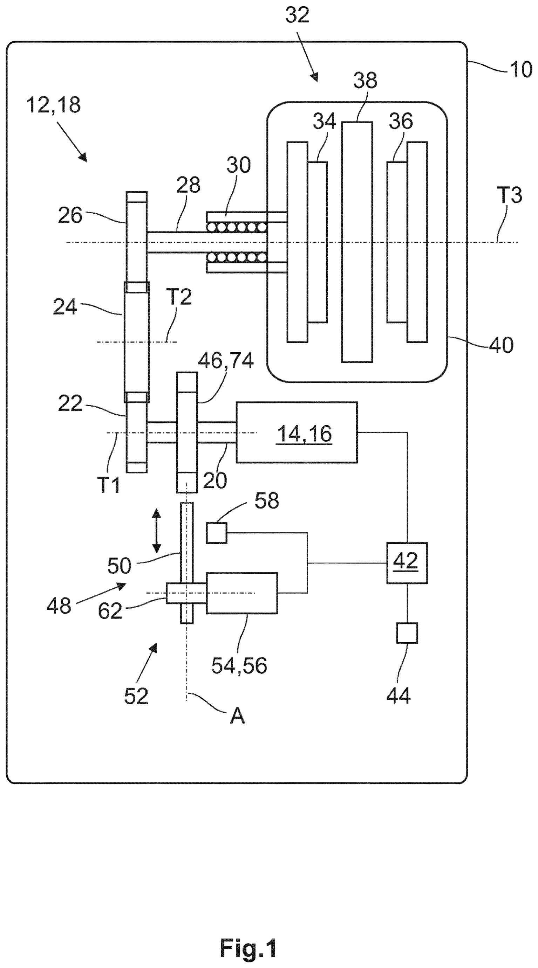

Figur 1 zeigt eine prinzipielle Draufsicht auf ein Kraftfahrzeug 10, welches eine erfindungsgemäße elektromagnetische Betriebsbremse 12 aufweist. Die elektromechanische Betriebsbremse 12 umfasst dabei eine Antriebseinheit 14, welche beispielsweise einen Elektromotor 16 umfassen kann, der mit einem Antriebsstrang 18 zusammenwirkt. Der Antriebsstrang 18 weist in diesem Fall eine Antriebswelle 20 auf, die mit einem ersten Stirnrad 22 drehfest verbunden ist. Das erste Stirnrad 22 steht in kämmendem Eingriff mit einem zweiten Stirnrad 24, welches wiederum mit einem dritten Stirnrad 26 in kämmendem Eingriff steht. Die Antriebswelle 20 und das erste Stirnrad 22 drehen dabei um eine erste Drehachse T1, wobei das zweite Stirnrad 24 und das dritte Stirnrad 26 um eine zweite Drehachse T2 bzw. um eine dritte Drehachse T3 drehen, die im Wesentlichen parallel zur ersten Drehachse T1 verlaufen. Das dritte Stirnrad 26 ist drehfest mit einer Spindel 28 verbunden, welche mit einer Spindelhülse 30 in kämmendem Eingriff steht. Die Spindelhülse 30 wirkt mit einer Bremseinheit 32 zusammen, welche in diesem Fall einen nicht dargestellten Bremssattel aufweist, mit welchem ein erster Bremsbelag 34 und ein zweiter Bremsbelag 36 entlang der dritten Drehachse T3 bewegbar sind. Zwischen dem ersten Bremsbelag 34 und dem zweiten Bremsbelag 36 ist eine Bremsscheibe 38 angeordnet, welche drehfest mit einem Rad 40 des Kraftfahrzeugs 10 verbunden ist.

Der Elektromotor 16 ist mit einer Steuereinheit 42 verbunden, mit welcher der Elektromotor 16 aktiviert werden kann. Die Aktivierung kann auf Anforderung des Fahrers des Kraftfahrzeugs 10 oder automatisch anhand der jeweiligen Fahrsituation erfolgen. Darüber hinaus weist die Betriebsbremse 12 eine Temperaturmesseinrichtung 44 auf, auf deren Funktion später noch eingegangen wird.

Wird der Elektromotor 16 aktiviert, dreht er die Antriebswelle 20 und das erste Stirnrad 22 in eine erste Richtung. Diese Drehung wird über das zweite Stirnrad 24 auf das dritte Stirnrad 26 und folglich auf die Spindel 28 übertragen. Die Drehbewegung der Spindel 28 wird von in eine entlang der dritten Drehachse T3 gerichtete axiale Bewegung der Spindelhülse 30 umgewandelt. Diese axiale Bewegung wird auf den ersten Bremsbelag 34 übertragen. Die axiale Bewegung des ersten Bremsbelags 34 wird mittels des Bremssattels derart auf den zweiten Bremsbelag 36 übertragen, dass dieser sich entgegengesetzt zum ersten Bremsbelag 34 axial bewegt.

In Figur 1 ist zwischen den beiden Bremsbelegen 34, 36 und der Bremsscheibe 38 ein Abstand vorhanden, so dass sich die Bremsscheibe 38 ungehindert drehen kann. Folglich werden das Rad 40 und folglich das Kraftfahrzeug 10 nicht gebremst. Bei einer entsprechenden Aktivierung des Elektromotors 16 werden jedoch die beiden Bremsbeläge 34, 36 zur Bremsscheibe 38 hin bewegt, bis dass sie an der Bremsscheibe 38 anliegen und gegen diese gedrückt werden. Aufgrund der hierdurch wirkenden Reibung werden die Bremsscheibe 38 und folglich das Rad 40 des Kraftfahrzeugs 10 abgebremst.

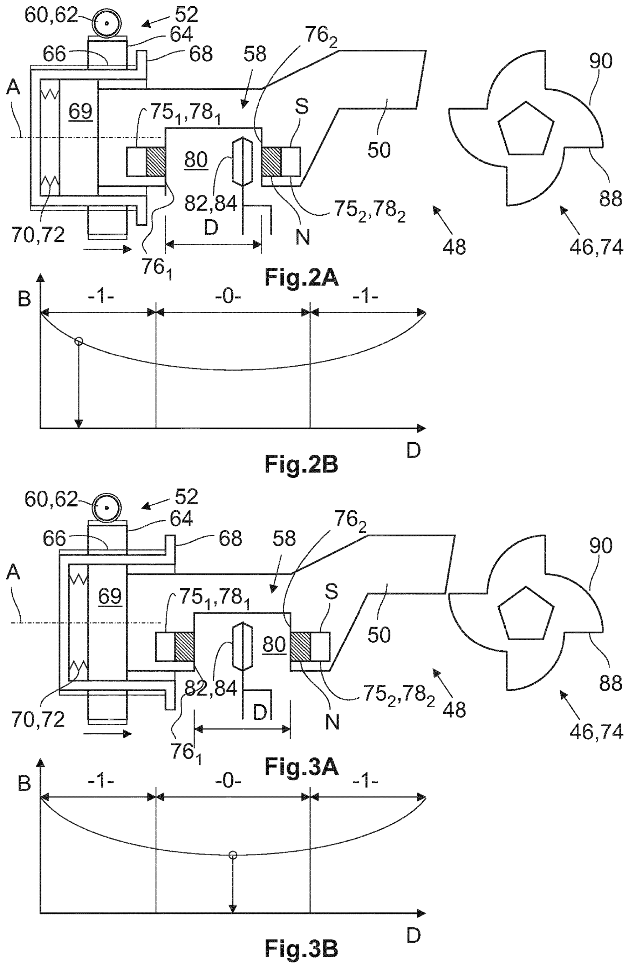

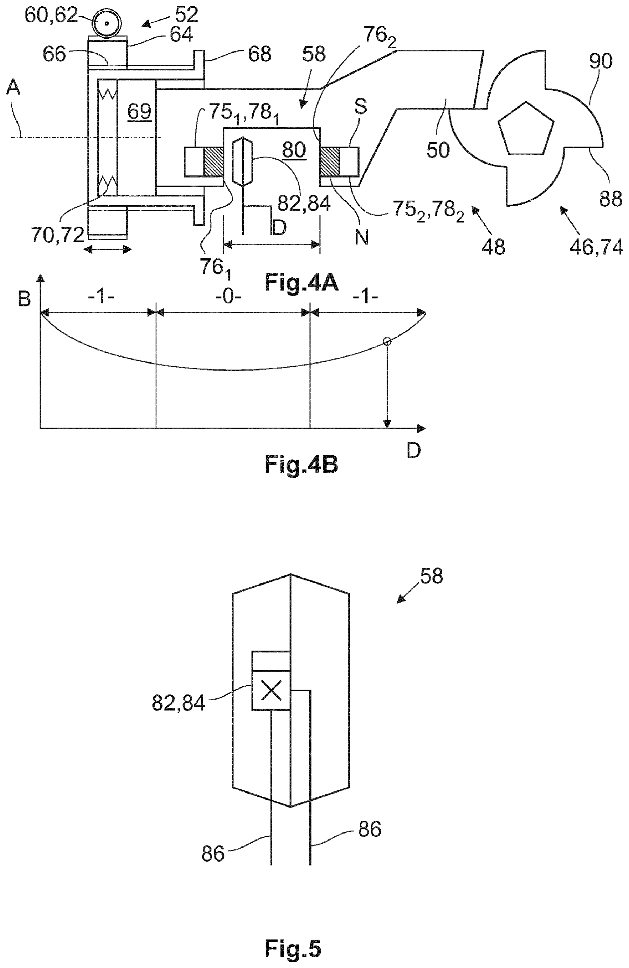

Darüber hinaus ist ein Sperrrad 46 drehfest mit der Antriebswelle 20 des Elektromotors 16 verbunden. Mit diesem Sperrrad 46 wirkt eine Blockiervorrichtung 48 zusammen, welche dann aktiviert werden kann, wenn das Kraftfahrzeug 10 zum Stehen gekommen ist. Die Blockiervorrichtung 48 umfasst einen Sperrstößel 50, der mittels einer Bewegungseinrichtung 52 entlang einer Verschiebeachse A bewegt werden kann. Hierzu weist die Bewegungseinrichtung 52 einen in diesem Fall als Gleichstrommotor 56 ausgeführten Antriebsmotor 54 auf. Im dargestellten Beispiel verläuft die Verschiebeachse A in etwa senkrecht zur ersten Drehachse T1, wobei auch andere Verläufe, insbesondere ein paralleler Verlauf, denkbar sind. Die Bewegungseinrichtung 52 kann den Sperrstößel 50 zwischen einer ersten Stellung (siehe Figur 2A), in welcher der Sperrstößel 50 das Sperrrad 46 freigibt, und einer zweiten Stellung (Figur 4A), in welcher der Sperrstößel 50 blockierend in das Sperrrad 46 eingreift, bewegen, wobei der Sperrstößel 50 Zwischenstellungen einnehmen kann, von denen eine in Figur 3A dargestellt ist. Greift der Sperrstößel 50 in das Sperrrad 46 ein, kann sich das Sperrrad 46 nicht mehr drehen. Aufgrund der Tatsache, dass das Sperrrad 46 drehfest mit der Antriebswelle 20 verbunden ist, können die beiden Bremsbeläge 34, 36 auch nicht mehr bewegt werden.

Um das Kraftfahrzeug 10 festzustellen, wird zunächst die betreffende Bremseinheit 32 derart angesteuert, dass die beiden Bremsbeläge 34, 36 an der Bremsscheibe 38 anliegen, sofern dies nicht schon ohnehin der Fall sein sollte. Im Stillstand des Kraftfahrzeugs 10 betätigt die Steuereinheit 42 automatisch oder auf Anforderung des Fahrers die Bewegungseinrichtung 52, so dass der Sperrstößel 50 von der ersten Stellung in die zweite Stellung bewegt wird und folglich in das Sperrrad 46 eingreift. Anschließend kann die gesamte Betriebsbremse 12 stromlos geschaltet werden, ohne dass die beiden Bremsbeläge 34, 36 bewegt werden könnten. Das Kraftfahrzeug 10 ist somit unabhängig davon, ob die Betriebsbremse 12 bestromten ist oder nicht, festgestellt.

Zum Lösen der Blockiervorrichtung 48 wird diese von der Steuereinheit 42 auf umgekehrte Weise betätigt, so dass sich der Sperrstößel 50 aus der zweiten Stellung in die erste Stellung bewegt. In der ersten Stellung gibt der Sperrstößel 50 das Sperrrad 46 frei, so dass sich dieses wieder um die erste Drehachse T1 bewegen kann. Dies hat zur Folge, dass sich auch die Antriebswelle 20 und folglich das erste Stirnrad 22, das zweite Stirnrad 24, das dritte Stirnrad 26 und die Spindel 28 drehen können, so dass die Bremsbeläge 34, 36 ebenfalls axial bewegt werden können. Das Kraftfahrzeug 10 kann nun wieder bewegt werden.

Die erfindungsgemäße Blockiervorrichtung 48 weist eine Positionsbestimmungseinrichtung 58 auf, mit welcher die Position des Sperrstößels 50 bestimmt werden kann. Die Information bezüglich der Position des Sperrstößels 50 wird an die Steuereinheit 42 übermittelt.

In Figur 2A ist eine prinzipielle Darstellung eines Ausführungsbeispiels der erfindungsgemäßen Blockiervorrichtung 48 dargestellt. Die Bewegungseinrichtung 52 umfasst eine Schnecke 60, die drehfest mit einer Abtriebswelle 62 des Gleichstrommotors 56 verbunden ist. Die Schnecke 60 steht in kämmendem Eingriff mit einer Spindelmutter 64, welche ein Innengewinde 66 aufweist, das in Eingriff mit einem Außengewinde einer axial bewegbar gelagerten Stellhülse 68 steht. Der Sperrstößel 50 ist mit einem Befestigungsabschnitt 69 axial verschiebbar mit der Stellhülse 68 verbunden. Zudem ist der Sperrstößel 50 mit einer Vorspannvorrichtung 70, welche eine Anzahl von Federn 72 umfassen kann, vorgespannt.

Wird der Gleichstrommotor 56 aktiviert, so überträgt sich die Drehung der Schnecke 60 auf die Spindelmutter 64, wobei die Drehung der Spindelmutter 64 eine Verschiebung der Stellhülse 68 entlang der Verschiebeachse A zur Folge hat. Die axiale Verschiebung der Stellhülse 68 wird auf den Sperrstößel 50 übertragen, so dass dieser sich entlang der Verschiebeachse A zum Sperrrad 46, welches in diesem Fall als ein Klinkenrad 74 ausgebildet ist, oder vom Sperrrad 46 weg bewegt wird. Der Befestigungsabschnitt 69 und die Vorspannvorrichtung 70 sind so eingerichtet, dass sich die Stellhülse 68 und der Sperrstößel 50 synchron entlang der Verschiebeachse A bewegen, sofern keine außergewöhnlichen Kräfte auf den Sperrstößel 50 einwirken, worauf später noch genauer eingegangen wird.

Der Sperrstößel 50 weist im dargestellten Ausführungsbeispiel eine erste Markierungsfläche 76₁ und eine zweite Markierungsfläche 76₁ auf, die senkrecht zur Verschiebeachse A verlaufen. Weiterhin weist der Sperrstößel 50 einen ersten Markierungsabschnitt 75₁ und einen zweiten Markierungsabschnitt 75₁ auf, die in diesem Fall von einem ersten Magnet 78₁ bzw. einem zweiten Magnet 78₂ gebildet werden. Der erste Magnet 78₁ und der zweite Magnet 78₂ sind so angeordnet, dass sie über die erste Markierungsfläche 76₁ und die zweite Markierungsfläche 76₁ mit der Positionsbestimmungseinrichtung 58 zusammenwirken, die zwischen der ersten und der zweiten Markierungsfläche 76₁ angeordnet ist. Der erste Magnet 78₁ und der zweite Magnet 78₂ sind so ausgerichtet, dass die gleichnamigen Pole der beiden Magnete 78₁, 78₂ zueinander hinzeigen, in diesem Fall die Nordpole N. Der Sperrstö-ßel 50 kann zumindest teilweise im Spritzgussverfahren hergestellt werden. Die beiden Magnete 78₁, 78₂ können umspritzt werden. Es bietet sich dabei an, die beiden Magnete 78₁, 78₂ erst nach Fertigstellung des Sperrstößels 50 zu magnetisieren, um beim Einlegen der beiden Magnete in das Spritzgusswerkzeug nicht die Ausrichtung der Magnete 78₁, 78₂ berücksichtigen zu müssen.

Im dargestellten Ausführungsbeispiel bilden die ersten und die zweiten Markierungsfläche 76₁, 76₂ einen Teil einer Ausnehmung 80 des Sperrstößels 50.

Im dargestellten Ausführungsbeispiel umfasst die Positionsbestimmungseinrichtung 58 einen Hallsensor 82, in diesem Fall einen 2D-Hallsensor 84, mit dem das sich zwischen den beiden Magneten 78₁, 78₂ ausbildende Magnetfeld gemessen werden kann. Insbesondere können Änderungen in der Stärke des Magnetfelds registriert werden. Der Hallsensor 82 ist ortsfest in Bezug auf den Sperrstößel 50 angeordnet.

In Figur 2B ist die sich ausbildende Stärke des Magnetfelds B in Abhängigkeit der Distanz D der beiden Magneten zum 2D-Hallsensor 84 aufgetragen. Nimmt der Sperrstößel 50 die in Figur 2A gezeigte erste Stellung ein, so befindet sich der zweite Magnet 78₂ vergleichsweise nahe am 2D-Hallsensor 84, weshalb die mit dem Kreis markierte Stärke des Magnetfelds B in dieser Stellung vergleichsweise groß ist.

Wird der Sperrstößel 50 aufgrund einer Aktivierung des Gleichstrommotors 56 von der ersten Stellung zum Sperrrad 46 hin in die in Figur 3A dargestellte Zwischenstellung bewegt, so vergrößert sich die Distanz D zwischen dem 2D-Hallsensor 84 und dem zweiten Magnet 78₂. Folglich verringert sich die vom 2D-Hallsensor 84 registrierte Stärke des Magnetfelds B. Wird der Sperrstößel 50 weiter in Richtung des Sperrrads 46 in die in Figur 4A dargestellte zweite Position gestellt, so nimmt zwar der Abstand zwischen dem Hallsensor 82 und dem zweiten Magnet 78₂ weiter zu, gleichzeitig verringert sich aber der Abstand zum ersten Magnet 78₁, weshalb die Stärke des vom Hallsensor 82 registrierten Magnetfelds B wieder ansteigt.

Im Ergebnis ergibt sich einen U-förmiger Verlauf der Stärke des Magnetfelds B über die Distanz D. In den Figuren 2B, 3B und 4B ist zu erkennen, dass der Verlauf der Stärke des Magnetfelds über den Abstand der Positionsbestimmungseinrichtung 58 zum ersten Magnet 78₁ und zum zweiten Magnet 78₂ in drei Abschnitte eingeteilt ist. Dem linken Abschnitt ist der Zustand "1", dem mittleren Abschnitt der Zustand "0" und dem rechten Abschnitt wiederum der Zustand "1" zugeordnet. Der 2D-Hallsensor 84 wird in einer Teaching-Routine so eingestellt, dass er für den Fall, dass die Stärke des Magnetfelds einen wählbaren Schwellenwert überschreitet, den Zustand "1" an die Steuereinheit 42 übermittelt

und für den Fall, dass die Stärke des Magnetfeld den Schwellenwert unterschreitet, den Zustand "0" an die Steuereinheit 42 übermittelt. Die Stellung des Sperrstößels 50 wird folglich anhand von nur zwei Zuständen bestimmt. Es ist daher nicht notwendig, einen absoluten Wert für die Stärke des Magnetfelds B, einen Wert für die Änderung des Magnetfelds B oder ähnliche Größen zu ermitteln. Die zu übermittelnde Datenmenge wird hierdurch gering gehalten und die Verwendung des einfach aufgebauten 2D-Hallsensors 84 ermöglicht, der mit zwei elektrischen Anschlüssen 86 auskommt (siehe Figur 5), so dass darüber hinaus auch der Verkabelungsaufwand gering gehalten wird.

Die Abschnitte sind so gewählt, dass für den Fall, dass der 2D-Hallsensor 84 den Zustand "1" ermittelt, der Sperrstößel 50 eindeutig in das Sperrrad 46 eingreift und somit die Bremseinheit 32 blockiert oder der Sperrstößel 50 eindeutig das Sperrrad 46 freigibt. Für den Fall, dass der 2D-Hallsensor 84 den Zustand "0" ermittelt, kann nicht eindeutig ermittelt werden, ob der Sperrstößel 50 in das Sperrrad 46 eingreift oder freigibt.

Um für den Fall, dass der 2D-Hallsensor 84 den Zustand "1" ermittelt, genau sagen zu können, ob der Sperrstößel 50 in das Sperrrad 46 eingreift oder der Sperrstößel 50 das Sperrrad 46 freigibt, können die folgenden zusätzlichen Informationen verwendet werden: Um den Sperrstößel 50 von der ersten in die zweite Stellung zu bewegen, muss der Gleichstrommotor 56 die Abtriebswelle 62 in eine erste Richtung drehen, wohingegen zum Bewegen des Sperrstößels 50 von der zweiten in die erste Stellung der Gleichstrommotor 56 so betrieben werden muss, dass die Abtriebswelle 62 in eine entgegengesetzte zweite Richtung gedreht wird. Wenn folglich der Gleichstrommotor beispielsweise in die erste Richtung gedreht wird, bewegt sich dabei der Sperrstößel 50 von der ersten in die zweite Stellung. Die Richtung, in welche der Gleichstrommotor 56 dreht, ist der Steuereinheit 42 bekannt, weshalb diese die beiden zunächst einmal gleichen Zustände "1" unterscheiden kann.

Wie bereits erwähnt, wird zunächst eine Teaching-Routine durchlaufen. Dabei kann ein Zähler beispielsweise in der ersten Stellung gestartet werden, wobei der Zähler zählt, wie viele Male der Zustand "1" ermittelt worden ist. Geraden Zählerständen kann beispielsweise eine Freigabe des Sperrrads 46 und ungeraden Zählerständen ein Blockieren des Sperrrads 46 zugeordnet werden.

Wie insbesondere aus Figur 3A hervorgeht, ist das Sperrrad 46 in einer Idealstellung, wenn eine der in diesem Fall vier im Wesentlichen ebenen Sperrflächen 88, mit denen der Sperrstößel 50 zum Blockieren des Sperrrads 46 zusammenwirkt, parallel zur Verschiebeachse A verläuft. Wie ebenfalls beispielsweise aus der Figur 3A zu entnehmen ist, verläuft zwischen zwei benachbarten Sperrflächen 88 eine gewölbte Sperrradfläche 90. Da die Steuereinheit 42 nicht nur den Gleichstrommotor 56 ansteuert, sondern auch den Elektromotor 16 der Betriebsbremse 12, kann die Steuereinheit 42 vor Beginn des Feststellens der Bremseinheit 32 das Sperrrad 46 in die in den Figuren 2A, 3A und 4A gezeigte Idealstellung stellen, so dass der Sperrstößel 50 wie in diesen Figuren gezeigt optimal auf die Sperrflächen 88 fahren und in das Sperrrad 46 eingreifen kann. Aufgrund der gewölbten Sperrradflächen 90 kann eine gewisse Abweichung von der Idealstellung akzeptiert werden. Wenn aber das Sperrrad 46 bezogen auf die in den Figuren 2A, 3A und 4A gezeigte Idealstellung um wenige Grad weiter nach rechts gedreht zum Stehen kommt, stößt der Sperrstö-ßel 50 auf den unmittelbar benachbart zur Sperrfläche 88 angeordneten Abschnitt der gewölbten Sperrradfläche 90. In diesem Fall werden die Federn 72 der Vorspannvorrichtung 70 komprimiert, so dass der Sperrstößel 50 und das Sperrrad 46 nicht beschädigt werden. Der Sperrstößel 50 bleibt in etwa in der in Figur 3A gezeigten Zwischenstellung stehen, ohne die zweite Stellung zu erreichen. Wie eingangs erwähnt, weist die erfindungsgemäße Blockiervorrichtung 48 eine Reaktionszeit von 0,3 Sekunden oder weniger auf. Wenn die Steuereinheit 42 registriert, dass der vom 2D-Hallsensor 84 zwar vom Zustand "1" in den Zustand "0", aber innerhalb der Reaktionszeit nicht wieder in den Zustand "1" gewechselt hat, so kann dies als Störung interpretiert werden, die auf eine von der Idealstellung abweichende Stellung des Sperrrads 46 hindeutet. In diesem Fall wird der Gleichstrommotor 56 von der Steuereinheit 42 so betrieben, dass der Sperrstößel 50 wieder zurück in die erste Stellung bewegt wird. Anschließend wird der Elektromotor 16 von der Steuereinheit 42 so angesteuert, dass das Sperrrad 46 etwas gedreht wird und der Sperrstößel 50 wie gewünscht eingreifen kann. In diesem Fall kann die oben beschriebene Zuordnung von geraden und ungeraden Zählerständen aktualisiert werden.

Neben der Vermeidung von Beschädigungen weist die Vorspannvorrichtung 70 auch noch die folgende weitere Funktion auf: Insbesondere dann, wenn die Blockiervorrichtung 48 nach einer längeren Fahrt des Kraftfahrzeugs 10 aktiviert wird, kann sich die Betriebsbremse 12 infolge der auf die Bremsscheibe 38 wirkenden Reibung stark erwärmt haben. Im Stillstand des Kraftfahrzeugs 10 kühlt sich die Betriebsbremse 12 wieder ab, wodurch es zu Setzvorgängen kommen kann. Aufgrund der von der Vorspannvorrichtung 70 aufgebrachten Vorspannkraft wird verhindert, dass der Eingriff des Sperrstößels 50 in das Sperrrad 46 aufgehoben wird.

Die Temperaturmesseinrichtung 44 ist ebenfalls aufgrund der starken Temperaturschwankungen vorgesehen. Die Temperatur kann einen Einfluss auf die vom 2D-Hallsensor 84 ermittelten Daten haben, wobei der Einfluss der Temperatur mittels der Temperaturmesseinrichtung 44 eliminiert werden kann.

In Figur 5 ist der 2D-Hallsensor 84 isoliert gezeigt. Man erkennt, dass er mit zwei elektrischen Anschlüssen 86 auskommt und eine markierte Seite aufweist.

### Bezugszeichenliste

- 10: Kraftfahrzeug
- 12: Betriebsbremse
- 14: Antriebseinheit
- 16: Elektromotor
- 18: Antriebsstrang
- 20: Antriebswelle
- 22: erstes Stirnrad
- 24: zweites Stirnrad
- 26: drittes Stirnrad
- 28: Spindel
- 30: Spindelhülse
- 32: Bremseinheit
- 34: erster Bremsbelag
- 36: zweiter Bremsbelag
- 38: Bremsscheibe
- 40: Rad
- 42: Steuereinheit
- 44: Temperaturmesseinrichtung
- 46: Sperrrad
- 48: Blockiervorrichtung
- 50: Sperrstößel
- 52: Bewegungseinrichtung
- 54: Antriebsmotor
- 56: Gleichstrommotor
- 58: Positionsbestimmungseinrichtung
- 60: Schnecke
- 62: Antriebswelle
- 64: Spindelmutter
- 66: Innengewinde
- 68: Stellhülse
- 69: Befestigungsabschnitt
- 70: Vorspannvorrichtung
- 72: Feder
- 74: Klinkenrad
- 75: Markierungsabschnitt
- 75₁: erster Markierungsabschnitt
- 75₂: zweiter Markierungsabschnitt
- 76: Markierungsfläche
- 76₁: erste Markierungsfläche
- 76₂: zweite Markierungsfläche
- 78: Magnet
- 78₁: erster Magnet
- 78₂: zweiter Magnet
- 80: Ausnehmung
- 82: Hallsensor
- 84: 2D-Hallsensor
- 86: Anschluss
- 88: Sperrfläche
- 90: Sperrradfläche

- A: Verschiebeachse
- B: Stärke des Magnetfelds
- D: Distanz
- N: Nordpol
- S: Südpol
- T1: erste Drehachse
- T2: zweite Drehachse
- T3: dritte Drehachse

## Patentansprüche

1. Blockiervorrichtung für eine elektromechanische Betriebsbremse (12) eines Kraftfahrzeugs (10), wobei
- die elektromechanische Betriebsbremse (12) ein um eine Drehachse (T) drehbar gelagertes Sperrrad (46) aufweist, welches mit einer um dieselbe Drehachse (T) drehbaren Antriebswelle (20) eines Antriebsstrangs (18) der elektromechanischen Betriebsbremse (12) drehfest verbindbar oder verbunden ist und die Blockiervorrichtung (48)
- einen Sperrstößel (50), der zwischen einer ersten Stellung, in welcher der Sperrstößel (50) das Sperrrad (46) freigibt, und einer zweiten Stellung, in welcher der Sperrstößel (50) zum Blockieren in das Sperrrad (46) eingreift, axial entlang einer Verschiebeachse (A) bewegbar ist,
- eine Bewegungseinrichtung (52) zum Bewegen des Sperrstößels (50) entlang der Verschiebeachse (A), und
- eine Positionsbestimmungseinrichtung (58) zum Bestimmen der Position des Sperrstößels (50) umfasst,
wobei der Sperrstößel (50) zumindest einen Markierungsabschnitt (75) umfasst, welcher mit der Positionsbestimmungseinrichtung (58) zum Bestimmen der Position des Sperrstößels (50) zusammenwirkt,
**dadurch gekennzeichnet, dass** der Sperrstößel (50) zumindest eine senkrecht zur Bewegungsrichtung verlaufende Markierungsfläche (76) aufweist, über welche der Markierungsabschnitt (75) mit der Positionsbestimmungseinrichtung (58) zusammenwirkt.

2. Blockiervorrichtung nach Anspruch 1,
**dadurch gekennzeichnet, dass** der Sperrstößel (50) zwei parallel zueinander verlaufende Markierungsflächen (76₁, 76₂) aufweist, wobei der ersten Markierungsfläche (76₁) ein erster Markierungsabschnitt (75₁) und der zweiten Markierungsfläche (76₂) ein zweiter Markierungsabschnitt (75₂) zugeordnet ist.

3. Blockiervorrichtung nach Anspruch 2,
**dadurch gekennzeichnet, dass** die Positionsbestimmungseinrichtung (58) zumindest teilweise zwischen den beiden Markierungsflächen (76₁, 76₂) angeordnet ist.

4. Blockiervorrichtung nach einem der Ansprüche 2 oder 3, **dadurch gekennzeichnet, dass** der erste Markierungsabschnitt (75₁) als ein erster Magnet (78₁) und der zweite Markierungsabschnitt (75₂) als ein zweiter Magnet (78₂) ausgebildet sind.

5. Blockiervorrichtung nach Anspruch 4,
**dadurch gekennzeichnet, dass** die Positionsbestimmungseinrichtung (58) einen Hallsensor (82) umfasst.

6. Blockiervorrichtung nach Anspruch 5,
**dadurch gekennzeichnet, dass** der Hallsensor (82) als ein 2D-Hallsensor (84) ausgeführt ist.

7. Blockiervorrichtung nach Anspruch 6,
**dadurch gekennzeichnet, dass** der erste Magnet (78₁) und der zweite Magnet (78₂) derart im Sperrstößel (50) angeordnet sind, dass ihre gleichnamigen Pole zueinander hinzeigen.

8. Blockiervorrichtung nach einem der Ansprüche 6 oder 7, **dadurch gekennzeichnet, dass** der Sperrstößel (50) zumindest teilweise als ein Spritzgussteil ausgebildet ist und der erste Magnet (78₁) und der zweite Magnet (78₂) beim Spritzgießen des Sperrstößels (50) umspritzt werden.

9. Blockiervorrichtung nach einem der vorherigen Ansprüche, **dadurch gekennzeichnet, dass** die Positionsbestimmungseinrichtung (58) eine Temperaturmesseinrichtung (44) umfasst.

10. Blockiervorrichtung nach einem der vorherigen Ansprüche, **dadurch gekennzeichnet, dass** die Bewegungseinrichtung (52) einen Gleichstrommotor (56) umfasst.

11. Elektromechanische Betriebsbremse (12) für ein Kraftfahrzeug (10), umfassend
- eine Bremseinheit (32) zum Abbremsen eines Rads (40) des Kraftfahrzeugs (10),
- eine Antriebseinheit (14) zum Bereitstellen eines Bremsmoments, mit welchem das Rad (40) abbremsbar ist,
- einen mit der Antriebseinheit (14) zusammenwirkenden Antriebsstrang (18), mit welchem das Bremsmoment zum Betätigen der Bremseinheit (32) auf die Bremseinheit (32) übertragbar ist,
- ein um eine Drehachse (T) drehbar gelagertes Sperrrad (46), welches mit einer um dieselbe Drehachse (T) drehbaren Antriebswelle (20) des Antriebsstrangs (18) einer drehfest verbunden ist, und
- eine Blockiervorrichtung (48) nach einem der vorherigen Ansprüche.

12. Elektromechanische Betriebsbremse (12) nach Anspruch 11, **dadurch gekennzeichnet, dass** die elektromechanische Betriebsbremse (12) eine Steuereinheit (42) zum Ansteuern der Antriebseinheit (14) umfasst, wobei die Positionsbestimmungseinrichtung (58) mit der Steuereinheit (42) zusammenwirkt.

13. Elektromechanische Betriebsbremse (12) nach Anspruch 12, **dadurch gekennzeichnet, dass** die Steuereinheit (42) und die Positionsbestimmungseinrichtung (58) so eingerichtet sind, dass die Bestimmung der Position des Sperrstößels (50) anhand eines ersten Zustands und eines zweiten Zustands vorgenommen wird.

14. Kraftfahrzeug (10), umfassend eine elektromechanische Betriebsbremse (12) nach einem der Ansprüche 12 bis 13.

## Claims

1. Locking device for an electromechanical service brake (12) of a motor vehicle (10), wherein
- the electromechanical service brake (12) comprises a locking wheel (46) rotatably mounted about an axis of rotation (T), which locking wheel is connectable or connected in a rotationally fixed manner to a drive shaft (20), rotatable about the same axis of rotation (T), of a drive train (18) of the electromechanical service brake (12), and the locking device (48) comprises
- a locking tappet (50), which is axially movable along a displacement axis (A) between a first position, in which the locking tappet (50) releases the locking wheel (46), and a second position, in which the locking tappet (50) engages the locking wheel (46) in order to block it,
- a movement device (52) for moving the locking tappet (50) along the displacement axis (A), and
- a position determination device (58) for determining the position of the locking tappet (50),
wherein the locking tappet (50) comprises at least one marking section (75), which cooperates with the position determination device (58) for determining the position of the locking tappet (50),
**characterized in that** the locking tappet (50) comprises at least one marking surface (76) extending perpendicular to the direction of movement, via which marking surface the marking section (75) cooperates with the position determination device (58).

2. The locking device according to claim 1,
**characterized in that** the locking tappet (50) comprises two marking surfaces (76₁, 76₂) extending parallel to one another, wherein a first marking section (75₁) is assigned to the first marking surface (76₁), and a second marking section (75₂) is assigned to the second marking surface (76₂) .

3. The locking device according to claim 2,
**characterized in that** the position determination device (58) is arranged at least partially between the two marking surfaces (76₁, 76₂).

4. The locking device according to either claim 2 or claim 3, **characterized in that** the first marking section (75₁) is formed as a first magnet (78₁), and the second marking section (75₂) is formed as a second magnet (78₂).

5. The locking device according to claim 4,
**characterized in that** the position determination device (58) comprises a Hall sensor (82).

6. The locking device according to claim 5,
**characterized in that** the Hall sensor (82) is implemented as a 2D Hall sensor (84).

7. The locking device according to claim 6,
**characterized in that** the first magnet (78₁) and the second magnet (78₂) are arranged in the locking tappet (50) such that their like poles face one another.

8. The locking device according to either claim 6 or claim 7, **characterized in that** the locking tappet (50) is formed at least partially as an injection-molded part, and the first magnet (78₁) and the second magnet (78₂) are overmolded during the injection molding of the locking tappet (50).

9. The locking device according to any one of the preceding claims,
**characterized in that** the position determination device (58) comprises a temperature measuring device (44).

10. The locking device according to any one of the preceding claims,
**characterized in that** the movement device (52) comprises a direct-current motor (56).

11. An electromechanical service brake (12) for a motor vehicle (10), comprising
a braking unit (32) for decelerating a wheel (40) of the motor vehicle (10),
a drive unit (14) for providing a braking torque by means of which the wheel (40) can be decelerated,
a drive train (18) cooperating with the drive unit (14), by means of which drive train the braking torque can be transmitted to the braking unit (32) for actuating the braking unit (32),
a locking wheel (46) rotatably mounted about an axis of rotation (T), which locking wheel is connected in a rotationally fixed manner to a drive shaft (20), rotatable about the same axis of rotation (T), of the drive train (18), and
a locking device (48) according to any one of the preceding claims.

12. The electromechanical service brake (12) according to claim 11,
**characterized in that** the electromechanical service brake (12) comprises a control unit (42) for controlling the drive unit (14), wherein the position determination device (58) cooperates with the control unit (42).

13. The electromechanical service brake (12) according to claim 12,
**characterized in that** the control unit (42) and the position determination device (58) are configured such that the determination of the position of the locking tappet (50) is carried out on the basis of a first state and a second state.

14. A motor vehicle (10), comprising an electromechanical service brake (12) according to any one of claims 12 to 13.

## Revendications

1. Dispositif de blocage d'un frein de service électromécanique (12) d'un véhicule automobile (10), dans lequel
- le frein de service électromécanique (12) comportant une roue de blocage (46), montée à rotation autour d'un axe de rotation (T), qui peut être relié ou est relié solidairement en rotation à un arbre d'entraînement (20) tournant autour du même axe (T) d'une ligne de transmission (18) du frein de service électromécanique (12), et le dispositif de blocage (48),
- un poussoir de blocage (50), mobile axialement selon un axe de coulissement (A) entre une première position, dans laquelle le poussoir de blocage (50) libère la roue de blocage (46), et une seconde position, dans laquelle le poussoir de blocage (50) pénètre, pour le blocage, dans la roue de blocage (46),
- une installation de déplacement (52) pour déplacer le poussoir de blocage (50), selon l'axe de coulissement (A), et
- une installation de détermination de position (58) pour déterminer la position du poussoir de blocage (50),
dans lequel le poussoir de blocage (50) comporte au moins un segment de marquage (75), qui coopère avec l'installation de détermination de position (58) pour déterminer la position du poussoir de blocage (50),
**caractérisé en ce que** le poussoir de blocage (50) comporte au moins une surface de marquage (76), qui est perpendiculaire à la direction de déplacement et par laquelle le segment de marquage (75) coopère avec l'installation de détermination de position (58).

2. Dispositif de blocage selon la revendication 1,
**caractérisé en ce que** le poussoir de blocage (50) comporte deux surfaces de marquage (76₁, 76₂) parallèles l'une à l'autre, dans lequel la première surface de marquage (76₁) ayant un premier segment de marquage (75₁) et la seconde surface de marquage (76₂) ayant un second segment de marquage (75₂).

3. Dispositif de blocage selon la revendication 2,
**caractérisé en ce que** l'installation de détermination de position (58) est au moins en partie entre les deux surfaces de marquage (76₁, 76₂).

4. Dispositif de blocage selon l'une des revendications 2 ou 3,
**caractérisé en ce que** le premier segment de marquage (75₁) est réalisé par un premier aiment (78₁) et le second segment de marquage (75₂) est réalisé par un second aimant (78₂).

5. Dispositif de blocage selon la revendication 4,
**caractérisé en ce que** l'installation de détermination de position (58) comporte un capteur Hall (82).

6. Dispositif de blocage selon la revendication 5,
**caractérisé en ce que** le capteur Hall (82) est réalisé en capteur Hall-2D (84).

7. Dispositif de blocage selon la revendication 6,
**caractérisé en ce que** le premier aimant (78₁) et le second aimant (78₂) sont prévus dans le poussoir de blocage (50) pour que leurs pôles de même nom soient tournés l'un vers l'autre.

8. Dispositif de blocage selon l'une des revendications 6 ou 7,
**caractérisé en ce que** le poussoir de blocage (50) est réalisé au moins en partie comme pièce moulée par injection et le premier aimant (78₁) et le second aimant (78₂) sont surmoulés lors du moulage par l'injection du poussoir de blocage (50).

9. Dispositif de blocage selon l'une des revendications précédentes,
**caractérisé en ce que** l'installation de détermination de position (58) comprend une installation de mesure de température (44).

10. Dispositif de blocage selon l'une des revendications précédentes,
**caractérisé en ce que** l'installation de déplacement (52) comprend un moteur à courant continu (56).

11. Frein de service électromécanique (12) pour un véhicule automobile (10), comprenant :
- une unité de frein (32) pour freiner une roue (40) du véhicule (10),
- une unité d'entraînement (14) pour fournir un couple de freinage permettant de freiner la roue (40),
- une ligne de transmission (18) coopérant avec l'unité d'entraînement (14) et qui transmet le couple de freinage à l'unité de freinage (32) pour actionner l'unité de frein (32),
- une roue de blocage (46) montée à rotation autour d'un axe de rotation (T), et relié solidairement en rotation à un arbre d'entraînement (20) de la ligne de transmission (18), tournant autour du même axe de rotation (T), et
- un dispositif de blocage (48) selon l'une des revendications précédentes.

12. Frein de service électromécanique (12) selon la revendication 11,
**caractérisé en ce que** le frein de service électromécanique (12) comporte une unité de commande (42) pour commander l'unité d'entraînement (14), l'installation de détermination de positon (58) coopérant avec l'unité de commande (42).

13. Frein de service électromécanique (12) selon la revendication 12,
**caractérisé en ce que** l'unité de commande (42) et l'installation de détermination de position (58) sont conçues pour déterminer la position de poussoir de blocage (50) à l'aide d'un premier état et d'un second état.

14. Véhicule automobile (10) comprenant un frein de service électromécanique (12) selon l'une des revendications 12 à 13.
